# EUROPÄISCHE PATENTSCHRIFT

(11) **EP 2 478 408 B1**
(45) Veröffentlichungstag und Bekanntmachung des Hinweises auf die Patenterteilung: **21.12.2016**
(21) Anmeldenummer: 10755141.8
(22) Anmeldetag: 15.09.2010
(51) Int. Cl.: G02C 5/22

(54) **BRILLENGELENK UND BRILLENGESTELL**
EYEGLASS JOINT AND EYEGLASS FRAME
ARTICULATION DE LUNETTES ET CHÂSSIS DE LUNETTES

(30) Priorität: 16.09.2009 DE 102009029491
(43) Veröffentlichungstag der Anmeldung: 25.07.2012
(73) Patentinhaber: Mykita Studio GmbH, 10115 Berlin (DE)
(72) Erfinder: HAFFMANS, Daniel, 10115 Berlin (DE); HAFFMANS, Phillipp, 10115 Berlin (DE); GOTTSCHLING, Harald, 10435 Berlin (DE); KRÜGER, Moritz, 10437 Berlin (DE); GÜNTERT, Martin, 10437 Berlin (DE)
(74) Vertreter: Schubert, Klemens
(86) Internationale Anmeldenummer: PCT/EP2010/063570
(87) Internationale Veröffentlichungsnummer: WO 2011/032995

(56) Entgegenhaltungen:
- EP-A1- 0 455 999
- WO-A1-2008/034440
- DE-A1- 3 837 180
- DE-U1- 8 812 332

## Beschreibung

Die Erfindung betrifft ein Brillengelenk, bestehend aus zwei Gelenkteilen und mindestens einer Verbindungsklammer. Ferner betrifft die Erfindung ein Brillengestell, bestehend aus zwei erfindungsgemäßen Brillengelenken, zwei Brillenbügeln und einer Brillenfassung.

Bei den meisten Brillengestellen lassen sich die Brillenbügel durch ein Brillengelenk anwinkeln. Das Brillengelenk ist dabei häufig in Form eines Scharniers ausgebildet, dessen Komponenten durch eine Schraube zusammengehalten werden. Diese Scharniere besitzen vielfach einen Anschlag, der den Aufschlagwinkel α, den die Gelenkteile zueinander ausbilden, begrenzt. Durch diese Begrenzung wird verhindert, dass der Aufschlagwinkel α einen Wert von ungefähr 180° überschreitet. Eine solche Konstruktion hat jedoch den Nachteil, dass eine Überschreitung des Aufschlagwinkels, also ein weiteres Aufschlagen des Brillenbügels, dazu führen kann, dass das Brillengestell verbogen wird oder gar bricht. Ein weiterer Nachteil von Brillengelenken im Stand der Technik ist, dass sich die im Scharnier verwendete Schraube mit der Zeit lösen kann und nachgezogen werden muss.

Die WO 2008/034440 A1 beschreibt einen Bausatz für ein Brillengelenk oder ein Brillengestell, das aus mindestens zwei Bauteilen besteht, welche drei bis fünf Knickkanten aufweisen, so dass durch Biegung an den Knickkanten um 90° eine quaderförmige Struktur entsteht, die aus einer Grundfläche, zwei Seitenflächen und ein bis drei Verbindungsflächen besteht, wobei die Seitenflächen jeweils an einer Seite ein Verbindungselement aufweisen.

In der DE 38 37 180 A1 werden Brillenscharniere offenbart, die ihre Federwirkung durch aufgesteckte Federclips erhalten und dabei gleichzeitig eine Gangregulierung der Scharnierhälften sowie eine Arretierbarkeit derselben aufweisen.

In der EP 0 455 999 A1 wird eine elastische Gelenkvorrichtung offenbart. Insbesondere ist eine Scharniervorrichtung beschrieben, die die Gelenke der Brille mit dem dazugehörigen Brillengestell der Brille verbindet und eine elastische Spreizung der Brillenbügel zum Brillengestell über die normale Öffnungsstellung hinaus ermöglicht.

Aufgabe der Erfindung ist es deshalb, ein Brillengelenk bereitzustellen, das die Nachteile des Standes der Technik überwindet. Weiterhin ist es eine Aufgabe der vorliegenden Erfindung, ein Brillengestell bereitzustellen, welches die erfindungsgemäßen Brillengelenke umfasst.

Die Aufgabe der vorliegenden Erfindung wird durch ein Brillengelenk gelöst, das aus zwei Gelenkteilen und mindestens einer Verbindungsklammer besteht, welche die Gelenkteile gelenkig zusammenhält.

Die Aufgabe der Erfindung wird also gelöst durch die Bereitstellung eines Brillengelenks gemäß dem Hauptanspruch. Vorteilhafte Ausgestaltungen des erfindungsgemäßen Brillengelenks sind in den abhängigen Unteransprüchen gekennzeichnet.

Das erfindungsgemäße Brillengelenk 1 besteht aus zwei Gelenkteilen 2, 2a und mindestens einer Verbindungsklammer 3, wobei die mindestens eine Verbindungsklammer 3 ohne Verwendung von Schrauben, Achsstiften oder anderen Befestigungsmitteln die Gelenkteile 2, 2a gelenkig zusammenhält, wobei eines der Gelenkteile 2 eine Wölbung 4 aufweist und das andere Gelenkteil 2a eine kalottenförmige Kappe 5 aufweist, wobei die Wölbung 4 des einen Gelenkteils 2 in der kalottenförmigen Kappe 5 des anderen Gelenkteils 2a angeordnet ist,
die Verbindungsklammer 3 ein gebogener, länglicher Materialstreifen ist, dessen Enden 9 zueinander weisend gebogen sind,
und das die Wölbung 4 aufweisende Gelenkteil 2 einen Gelenkkopf bildet, und das die kalottenförmige Kappe 5 aufweisende Gelenkteil 2a eine Gelenkpfanne bildet.

Erfindungsgemäß bevorzugt ist es ferner, dass jedes der Gelenkteile 2, 2a mindestens eine Aussparung 10 aufweist, in der die mindestens eine Verbindungsklammer 3 fixierbar ist.

Erfindungsgemäß ist die Verbindungsklammer 3 ein gebogener, länglicher Materialstreifen, dessen Enden 9 zueinander weisend gebogen sind.

Erfindungsgemäß bevorzugt ist es auch, dass die abgebogenen Enden 9 der Verbindungsklammer 3 jeweils in eine der Aussparungen 10 der Gelenkteile 2, 2a eingreifen.

Offenbart wird, dass bei der Änderung des Aufschlagwinkels α das Brillengelenk 1 selbstständig entweder von einer Position mit einem aufgeklappten Aufschlagwinkel α_{auf} in eine Position mit einem eingeklappten Aufschlagwinkel α_{zu} umspringt oder von einer Position mit einem eingeklappten Aufschlagwinkel α_{zu} in eine Position mit einem aufgeklappten Aufschlagwinkel α_{auf} umspringt.

Offenbart wird auch, dass der aufgeklappte Aufschlagwinkel α_{auf} einem Winkel von etwa 180° entspricht und der eingeklappte Aufschlagwinkel α_{zu} einem Winkel von etwa 90° entspricht.

Es ist erfindungsgemäß besonders bevorzugt, dass mindestens eines der beiden Gelenkteile 2, 2a einen Anschlag 8 aufweist, der den Aufschlagwinkel beim Anwinkeln des Brillengelenks 1 begrenzt.

Offenbart wird, dass der Aufschlagwinkel α_{auf} zerstörungsfrei einen Wert von ungefähr 180° bis ungefähr 186° annehmen kann und dass der Aufschlagwinkel α_{zu} zerstörungsfrei einen Wert von ungefähr 90° bis ungefähr 85° annehmen kann.

Bevorzugt ist auch ein erfindungsgemäßes Brillengelenk 1, wobei das Gelenkteil 2a mindestens eine blockartige Materialerhebung 15 und das Gelenkteil 2 eine Schiene 16 aufweist, die so geformt und dimensioniert ist, dass sie die mindestens eine blockartige Materialerhebung 15 aufnehmen kann.

Bevorzugt ist es erfindungsgemäß ferner, dass die Gelenkteile 2, 2a Vorrichtungen 6 zur Befestigung an einem Brillenbügel oder einer Brillenfassung aufweisen.

Besonders bevorzugt ist es dabei, dass die Gelenkteile 2, 2a mindestens einen Stift 7, mindestens einen Anker und/oder mindestens eine strukturierte Klebefläche aufweisen, der beziehungsweise die in einem Brillenbügel oder einer Brillenfassung fixierbar ist beziehungsweise sind.

Erfindungsgemäß bevorzugt ist ferner ein Brillengelenk 1, wobei das eine Ende eines der beiden Gelenkteile 2, 2a eine Verlängerung in Form eines Brillenbügels aufweist und/oder das freie Ende des anderen Gelenkteils 2, 2a eine Verlängerung in Form einer Brillenfassung aufweist.

Gegenstand der Erfindung ist auch ein Brillengestell, bestehend aus zwei erfindungsgemäßen Brillengelenken 1, zwei Brillenbügeln und einer Brillenfassung, wobei die Brillengelenke 1 auf der einen Gelenkseite mit der Brillenfassung verbunden sind und auf der anderen Gelenkseite mit jeweils einem Brillenbügel verbunden sind.

Gegenstand der Erfindung ist auch ein Brillengestell, welches mindestens ein erfindungsgemäßes Brillengelenk 1 umfasst.

Ein weiterer Gegenstand der vorliegenden Erfindung ist die Verwendung eines erfindungsgemäßen Brillengelenks 1 zur Herstellung eines Brillengestells.

Bei erhöhter Krafteinwirkung ermöglicht der erfindungsgemäße Aufbau des Brillengelenks eine zerstörungsfreie Überschreitung des Aufschlagwinkels α von einem Wert α_{auf}, der ungefähr 180° beträgt, bis hin zu einem Wert von αₘₐₓ von ungefähr 186°(Überbiegung) und ein Unterschreiten des Aufschlagwinkels α von einem Wert α_{zu}, der ungefähr 90° beträgt, bis hin zu einem Wert von amin von ungefähr 85° (Unterbiegung). amin wird in den meisten Fällen von der Brillenfassung begrenzt. Ist das nicht der Fall, kann die dem Kopf zugewandte Seite der Klammer aber auch als Anschlag dienen und ein zu weites Unterschlagen verhindern.

Bei erhöhter Krafteinwirkung ist weiterhin auch eine zerstörungsfreie Auslenkung des erfindungsgemäßen Brillengelenks senkrecht zur Gelenkachse (aus der durch die Gelenkteile gebildeten Ebene heraus) möglich. Hierbei kann die Auslenkung aus der Ebene bis zu einem Winkel α_{oben} von etwa 4° bzw. αᵤₙₜₑₙ von ebenfalls etwa 4° erfolgen. Diese Bewegung ist erst durch das Fehlen einer Gelenkachse möglich. Wobei im vorliegenden Fall unter Gelenkachse eine Achse verstanden wird, die durch eine Schraube, Welle oder ein ähnliches Element gebildet wird.

Die Bewegung in Richtung α_{oben} bzw. αᵤₙₜₑₙ kann durch die Breite der Klammer begrenzt werden. Die Klammer verkantet sich dabei im Inneren des Gelenks.

Weiterhin kann es bei dem erfindungsgemäßen Gelenk zu einer Auslenkung in Form einer Torsion in der Achse des Brillenbügels kommen. Je mehr sich die Form der beiden Laufflächen des Gelenks der Form einer Kugel annähert, desto leichter kommt es zu einer solchen Torsion. Ist diese Art der Drehbewegung nicht erwünscht, können kreisbogenförmige Schienen im Bereich der Lauffläche diese Bewegung verhindern.

Das Ausmaß der zerstörungsfreien Bewegungen in die Raumrichtungen, also der Spielraum des erfindungsgemäßen Gelenks, wird weitestgehend durch die Geometrie und das Material der Verbindungsklammer definiert.

Eine Überdehnung des Brillengelenks, also eine Erhöhung des Aufschlagwinkels α_{auf} über einen Wert von ungefähr 180° bis hin zu einem Wert von αₘₐₓ, eine Unterdehnung des Brillengelenks, also eine Verringerung des Aufschlagwinkels α_{zu} unter einen Wert von 90 bis hin zu αₘᵢₙ, und eine Auslenkung des Brillengelenks senkrecht zur Gelenkachse (aus der durch die Gelenkteile gebildeten Ebene) bis zu den Werten α_{oben} bzw. αᵤₙₜₑₙ werden durch das erfindungsgemäße Brillengelenk gedämpft. Genauso führen leichte Schläge, wie sie im Alltag auftreten können, gegen das Gelenk oder gegen ein Brillengestell, in welches das Gelenk integriert ist, nicht zu einem Verbiegen oder zum Bruch des Brillengelenks oder Brillengestells.

Weiterhin ist gegenüber Brillengelenken des Standes der Technik vorteilhaft, dass auf die Verwendung von Schrauben, Achsstiften oder anderen Befestigungsmitteln, wie sie normalerweise bei Brillengelenken üblich sind, verzichtet werden kann. Das einzige Teil, welches als Verschleißteil zu sehen ist, ist die Verbindungsklammer. Sie ist leicht auszutauschen.

Das erfindungsgemäße Brillengelenk ist eine vorteilhafte Kombination aus einem Kugelgelenk und einem Scharniergelenk.
Eines der Gelenkteile 2, 2a, nämlich Gelenkteil 2, weist vorzugsweise eine Wölbung 4 auf und das andere Gelenkteil 2a eine kalottenförmige Kappe 5, wobei die Wölbung 4 des einen Gelenkteils 2 in der kalottenförmigen Kappe 5 des anderen Gelenkteils 2a angeordnet ist.

Das die Wölbung 4 aufweisende Gelenkteil 2 bildet einen Gelenkkopf und das die kalottenförmige Kappe 5 aufweisende Gelenkteil 2a eine Gelenkpfanne. Damit eine gelenkige Verbindung zwischen Gelenkkopf und Gelenkpfanne entsteht und beibehalten wird, sind diese mit mindestens einer Verbindungsklammer 3 verbunden. Die Funktion der Verbindungsklammer 3 kann mit der Funktion der Sehnen und Bänder in der Anatomie verglichen werden. Die mindestens eine Verbindungsklammer 3 greift dabei um die durch Gelenkkopf und Gelenkpfanne gebildete Einheit.

Jedes der Gelenkteile weist vorzugsweise mindestens eine Aussparung auf, in der die mindestens eine Verbindungsklammer fixierbar ist. Die Aussparung kann dabei ein einfaches Loch oder ein Vorsprung in oder an dem Gelenkteil sein, wobei die Aussparung so ausgebildet ist, dass die mindestens eine Verbindungsklammer daran fixiert werden kann.
Die mindestens eine Verbindungsklammer wird dabei vorzugsweise durch Einhaken, durch einseitiges Verkleben und Einhaken, durch einseitiges Löten und Einhaken oder ähnliche Verfahren fixiert.

Die mindestens eine Verbindungsklammer ist ein gebogener, länglicher Materialstreifen, dessen Enden zueinander weisend gebogen sind. Die Verbindungsklammer besteht aus einem flexiblen Material, wie zum Beispiel Metall oder Kunststoff.

Die abgebogenen Enden der mindestens einen Verbindungsklammer greifen vorzugsweise jeweils in eine der Aussparungen der Gelenkteile. Am Rand der Aussparung kann eine Stufe angeordnet sein, die einer besseren Befestigung der Verbindungsklammer dient. Eine solche Stufe erhält man durch eine Materialreduzierung oder einen Durchbruch.

In einer bevorzugten Ausführungsform der Erfindung springt das Brillengelenk bei einer Änderung des Aufschlagwinkels α selbstständig um von einer Position mit einem aufgeklappten Aufschlagwinkel α_{auf} in eine Position mit einem eingeklappten Aufschlagwinkel α_{zu} oder von einer Position mit einem eingeklappten Aufschlagwinkel α_{zu} in eine Position mit einem aufgeklappten Aufschlagwinkel α_{auf}.

Durch die Spannung der Verbindungsklammer werden zwei Aufschlagwinkel a, nämlich α_{auf} und α_{zu}, definiert, in welche die Gelenkteile nach dem Auf- beziehungsweise Einklappen selbsttätig zurückkehren.

Der aufgeklappte Aufschlagwinkel α_{auf} entspricht vorzugsweise einem Winkel von 180° und der eingeklappte Aufschlagwinkel α_{zu} einem Winkel von ungefähr 90°.

Eines der beiden Gelenkteile oder beide weist beziehungsweise weisen vorzugsweise einen Anschlag auf, der den Aufschlagwinkel α begrenzt und α_{auf} und α_{zu} festlegt. Damit wird bei Verwendung des erfindungsgemäßen Brillengelenks in einem Brillengestell auch der Winkel festgelegt, der beim Öffnen oder Schließen der Brille zwischen Brillenbügel und Brillenfassung ausgebildet wird. Der Aufschlagwinkel α_{auf} des Brillengelenks von ungefähr 180° entspricht einem Winkel zwischen Brillenbügel und Brillenfassung von ungefähr 90°. Der Aufschlagwinkel α_{zu} des Brillengelenks von ungefähr 90° entspricht einem Winkel zwischen Brillenbügel und Brillengestell von ungefähr 180°.

Beim Überdehnen des Brillengelenks durch Ausbildung eines Winkels zwischen Brillenbügel und Brillengestell von mehr als 90° wird der Aufschlagwinkel α_{auf} des Brillengelenks auf den maximalen Wert αₘₐₓ durch die Verbindungsklammer begrenzt. Erst ein Überschreiten dieses Winkels bewirkt ein Verbiegen des Gelenks beziehungsweise des Brillengestells. Die Verbindungsklammer ist also nicht starr, sondern ermöglicht ein Überdehnen des Aufschlagwinkels α_{auf} auf einen Winkel, der größer als 180° ist (αₘₐₓ).

Um eine Drehbewegung des Bügels um die Bügelachse im aufgeschlagenen Zustand bzw. eine Schwenkbewegung des Bügels in Auf- und Abrichtung um den Gelenkmittelpunkt an der Frontmaske im eingeschlagenen Zustand zu verhindern oder einzudämmen, kann die Gelenkpfanne einen oder mehrere positiv ausgeformte Blöcke aufweisen, die in einer entsprechenden Schiene im Gegenstück laufen. Die normale Klappbewegung des Gelenks ist dadurch nicht beeinflusst. Nur ein Verdrehen der Gelenkteile zueinander wird mit der Ausformung von Schienen verhindert oder erschwert. Das schränkt die Beweglichkeit des Gelenks in alle Richtungen ein, wirkt aber einer unsachgemäßen Behandlung ggf. entgegen.

Damit das erfindungsgemäße Brillengelenk in einem Brillengestell Verwendung finden kann, besitzt jedes der zwei Gelenkteile vorzugsweise eine Vorrichtung zur Befestigung des Gelenkteils an einen Brillenbügel oder eine Brillenfassung. Diese Vorrichtung ist entweder in Form einer Einlage (eines Inlays) ausgebildet, mit dem ein Teil des Brillengelenks in einen Brillenbügel oder die Brillenfassung eingeschoben und dort fixiert wird, oder sie bildet einen Hohlraum, in den ein Teil des Brillenbügels oder der Brillenfassung eingeschoben wird.

Vorteilhafterweise wird das Brillengelenk mit einem Brillenbügel und der Brillenfassung durch Verkleben oder Verschweißen (Einschwemmen) verbunden.
Des Weiteren kann die Vorrichtung zur Befestigung der Gelenkteile Strukturen oder angeraute Flächen aufweisen, die die Verbindung zwischen Brillengelenk und Brillenbügel oder Brillenfassung festigen.

Weitere Mittel zur Befestigung der Gelenkteile umfassen vorzugsweise mindestens einen Stift, der in einem Brillenbügel oder einer Brillenfassung fixierbar ist. Eine solche Ausführungsform hat den Vorteil, dass der mindestens eine Stift in den Brillenbügel oder einen Teil der Brillenfassung getrieben werden kann und damit eine stabile Verbindung der Bauteile erreicht wird. Der mindestens eine Stift kann zusätzlich noch angeraut sein oder ein Profil aufweisen, wodurch die Verbindung der Bauteile zusätzlich gefestigt wird.

Bei den bisher beschriebenen Ausführungsformen wird das erfindungsgemäße Brillengelenk mit einem Brillenbügel und einer Brillenfassung verbunden. Das erfindungsgemäße Brillengelenk kann aber auch derart ausgebildet sein, dass der Brillenbügel oder die Brillenfassung Teil des Brillengelenks ist.

So weist in einer bevorzugten Ausführungsform der Erfindung ein Ende eines der beiden Gelenkteile des erfindungsgemäßen Brillengelenks eine Verlängerung in Form eines Brillenbügels auf. Alternativ oder zusätzlich kann das freie Ende des anderen Gelenkteils eine Verlängerung in Form einer Brillenfassung aufweisen.

Die Gelenkteile des erfindungsgemäßen Brillengelenks können durch Verfahren wie Prägen, Metallpulverspritzgießen, Zinkdruckguss oder Blechumformen herstellt werden.

Insbesondere das Metallpulverspritzgießen, auch als MIM-Verfahren (MIM: Metal Injection Molding) bezeichnet, ist ein geeignetes Verfahren zur Herstellung der Gelenkteile. Im Wesentlichen erfolgt die Herstellung mittels Metallpulverspritzgießens in vier Schritten:
1. Herstellung des Basismaterials, des sogenannten Feedstocks, durch Mischen von feinem Metallpulver, thermoplastischen Kunststoffen und einem plastizierfähigen Granulat.
2. Die Formgebung erfolgt mittels konventioneller Spritzgussmaschinen. Dabei entsteht ein sogenannter Grünling. Der Grünling ist ungefähr 20 % größer als das gewünschte Produkt, weist aber bereits alle geometrischen Eigenschaften des fertigen Endprodukts auf.
3. Das Entfernen der Binderbestandteile erfolgt je nach eingesetztem Material durch Extraktion, Katalyse oder Pyrolyse.
4. Die durch das Verfahren gewonnenen porösen Formkörper werden Bräunling genannt. Sie werden unter Vakuum oder Schutzgas gesintert und erreichen dabei ihre endgültige Geometrie.

Geeignete Metalle für die Herstellung der Gelenkteile sind vor allem rostfreie, nicht allergene (nickelfreie) Stähle von hohem Härtegrad. Auch Titanlegierungen und Magnesiumlegierungen sind mechanisch geeignet, aber kostenintensiver.

In weiteren Schritten werden die Gelenkteile gereinigt und entfettet. Anschließend kann die Oberfläche der Gelenkteile, je nach gewünschter Anwendung oder aus ästhetischen Gründen, gleitgeschliffen, poliert, mit einer Lackierung versehen, brüniert oder durch Auftragen weiterer Schichten, beispielsweise durch Galvanisierung oder PVD-Beschichtung (physical vapour deposition), weiterbehandelt werden.

Die durch das Metallpulverspritzgussverfahren hergestellten Gelenkteile können aber auch ohne weitere Behandlung mit mindestens einer Verbindungsklammer zu dem erfindungsgemäßen Brillengelenk zusammengefügt werden.

Bevorzugt ist auch die Herstellung der Gelenkteile im Spritzgussverfahren aus Kunststoff.

Kunststoffe wie Polyamid, Polyethylen, Polytetrafluorethylen, Polyethylenterephthalat und andere zähe Kunststoffe mit guten Gleiteigenschaften, ggf. mit einer teilweisen metallischen Armierung in den Auflagebereichen der Verbindungsklammer, sind mögliche Werkstoffe für das Gelenk.

Die Verbindungsklammer wird aus Metall hergestellt und in die gewünschte Form gebogen, durch ein Spritzgussverfahren aus Kunststoff hergestellt oder aus einem Kunststoffband unter Hitzeeinwirkung in Form gebracht.

Vorzugsweise fixiert man eine oder mehrere Verbindungsklammern in den Aussparungen der Gelenkteile. Die Aussparungen in den Gelenkteilen können dabei, wie oben beschrieben, ausgebildet sein. Zur Befestigung der Verbindungsklammer wird sie über die zwei Gelenkteile geklammert, so dass die Enden der Verbindungsklammer in die Aussparungen greifen.

Im Folgenden wird die Erfindung anhand von Figuren näher beschrieben. Im Einzelnen zeigt
- Figur 1 a-d: eine dreidimensionale Darstellung des erfindungsgemäßen Brillengelenks aus verschiedenen Blickwinkeln,
- Figur 2 a und b: eine dreidimensionale Darstellung einer zweiten Ausführungsform des erfindungsgemäßen Brillengelenks,
- Figur 3: eine Explosionsdarstellung der zweiten Ausführungsform des erfindungsgemäßen Brillengelenks,
- Figur 4 a und b: eine dreidimensionale Darstellung einer dritten Ausführungsform des erfindungsgemäßen Brillengelenks,
- Figur 5 a und b: eine dreidimensionale Darstellung einer vierten Ausführungsform des erfindungsgemäßen Brillengelenks,
- Figur 6 a und b: eine dreidimensionale Darstellung einer fünften Ausführungsform des erfindungsgemäßen Brillengelenks,
- Figur 7 a und b: eine dreidimensionale Darstellung einer sechsten Ausführungsform des erfindungsgemäßen Brillengelenks,
- Figur 8 a und b: eine dreidimensionale Darstellung einer siebten Ausführungsform des erfindungsgemäßen Brillengelenks,
- Figur 9 a und b: eine dreidimensionale Darstellung einer achten Ausführungsform des erfindungsgemäßen Brillengelenks,
- Figur 10 a: eine Explosionsdarstellung einer neunten Ausführungsform des erfindungsgemäßen Brillengelenks und

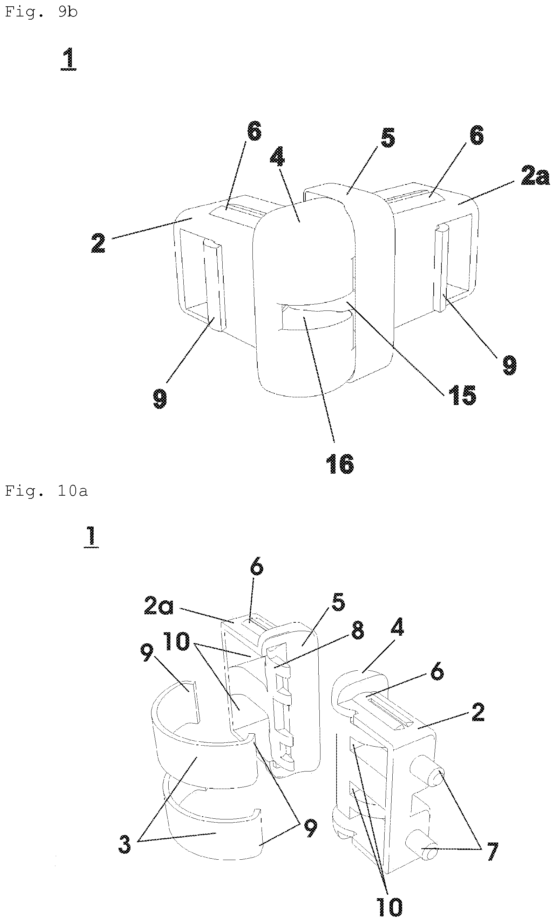

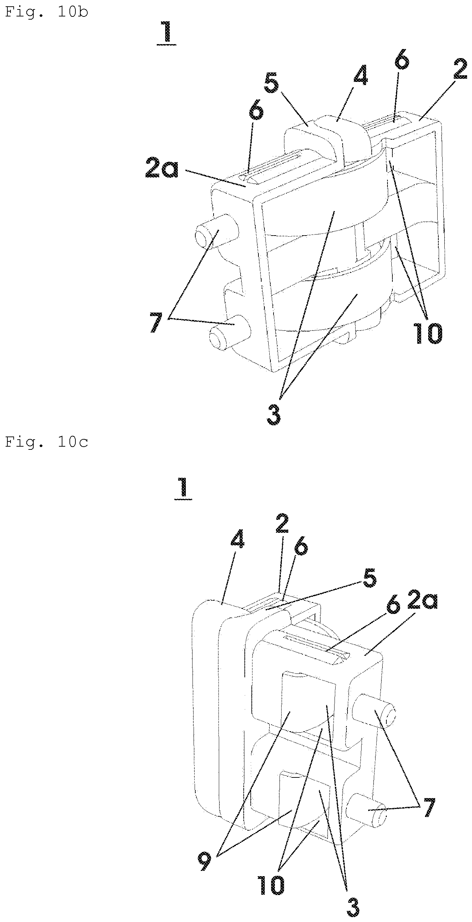

- Figur 10 b und c: eine dreidimensionale Darstellung der neunten Ausführungsform des erfindungsgemäßen Brillengelenks.

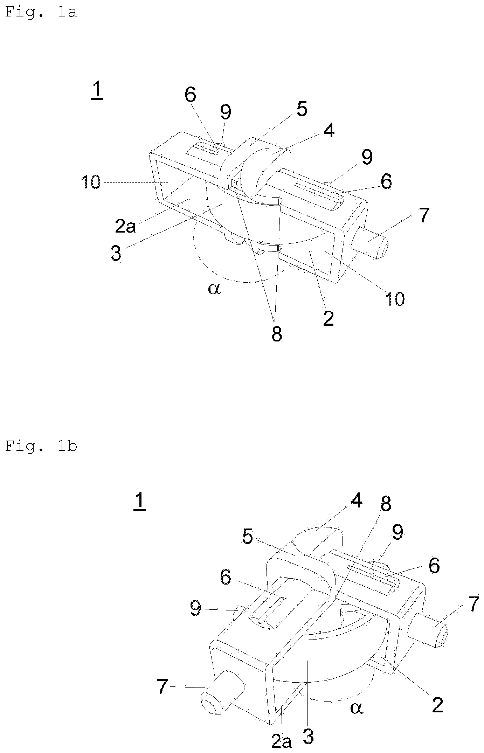

Die Figuren 1a bis 1d zeigen dreidimensionale Darstellungen des erfindungsgemäßen Brillengelenks 1 aus verschiedenen Blickwinkeln. Das Brillengelenk 1 besteht bei dieser Ausführungsform aus zwei Gelenkteilen 2 und 2a und einer Verbindungsklammer 3. Eines der zwei Gelenkteile 2 weist eine Wölbung 4 auf und das andere Gelenkteil 2a eine kalottenförmige Kappe 5. Dabei ist die Wölbung 4 des ersten Gelenkteils 2 in der kalottenförmigen Kappe 5 des zweiten Gelenkteils 2a angeordnet, so dass beide Gelenkteile 2 und 2a zusammen ein Kugelgelenk bilden, das durch die Verbindungsklammer 3 gelenkig zusammengehalten wird.

Die Gelenkteile 2 und 2a weisen eine Vorrichtung 6 auf, mit der sie mit einer Brillenfassung oder einem Brillenbügel verbindbar sind. Dabei wird die Vorrichtung 6 in eine Bohrung oder eine Aussparung eines Brillenbügels beziehungsweise einer Brillenfassung eingeschoben und gegebenenfalls dort verklebt. In der in den Figuren 1a bis 1d gezeigten Ausführungsform des erfindungsgemäßen Brillengelenks 1 weisen die Gelenkteile 2, 2a einen Stift 7 auf, der die Stabilität der Verbindung zwischen Brillengelenk 1 und Brillenfassung oder Brillenbügel erhöht.

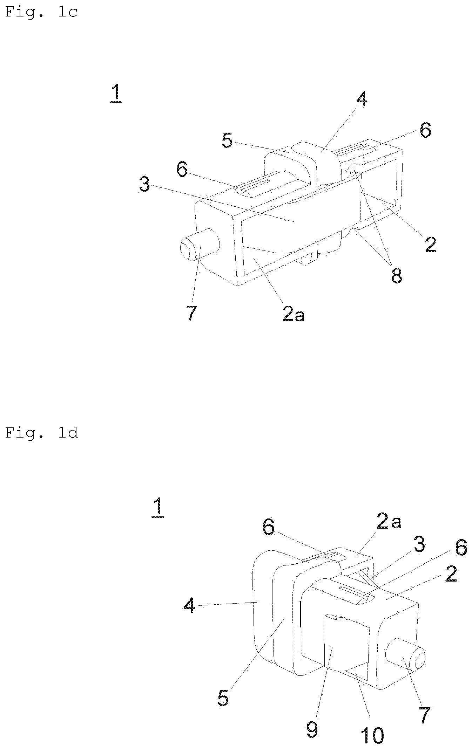

Die Figuren 1a, 1b und 1c zeigen das erfindungsgemäße Brillengelenk 1 von der Seite, die beim Tragen einer Brille mit einem solchen Brillengelenk 1, dem Kopf des Trägers zugewandt ist. Die Figur 1d zeigt die dem Kopf des Trägers abgewandte Seite des Brillengelenks 1.

Die Figuren 1a und 1c zeigen das Brillengelenk 1 in einer Position mit einem Aufschlagwinkel α_{auf} von 180°. Der erfindungsgemäße Aufbau des Brillengelenks 1 ermöglicht es, das Brillengelenk 1 zerstörungsfrei über den Aufschlagwinkel α_{auf} zu überstrecken, so dass der Aufschlagwinkel α größer als 180° ist (αₘₐₓ).

Die Figuren 1b und 1d zeigen das Brillengelenk 1 in einer Position mit einem Aufschlagwinkel α_{zu} von ungefähr 90°. Diese Position entspricht ungefähr der Position eines zugeklappten Brillenbügels.

Um die Bewegung des Brillengelenks 1 zu begrenzen, weisen beide Gelenkteile 2 und 2a einen Anschlag 8 auf. Dieser Anschlag 8 begrenzt das Umklappen des Brillengelenks 1 zwischen einem Aufschlagwinkel α von 90° und einem Aufschlagwinkel α von 180°. Dies entspricht einem Brillengelenk mit einem zugeklappten beziehungsweise aufgeklappten Brillenbügel.

Die Enden 9 der Verbindungsklammer 3 sind zueinander weisend gebogen und dienen der Fixierung der Verbindungsklammer 3. Wie in Figur 1d gezeigt, greift jeweils eines der beiden abgebogenen Enden 9 der Verbindungsklammer 3 in eine Aussparung 10 eines Gelenkteils 2, 2a.

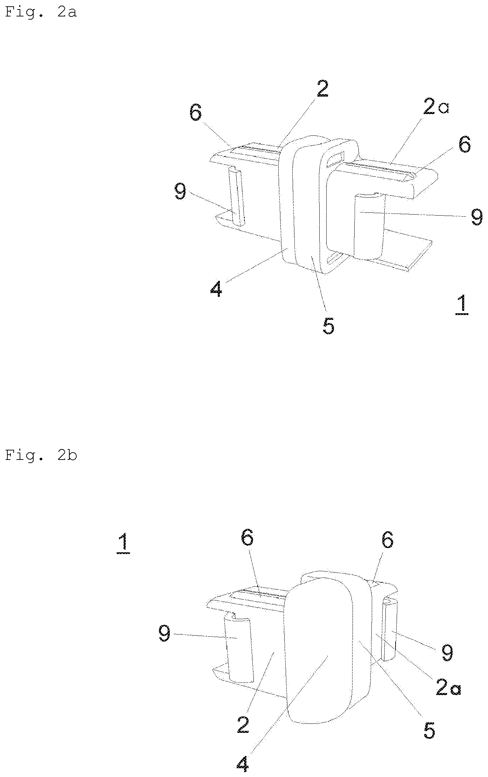

Die Figuren 2a und 2b zeigen eine weitere Ausführungsform des Brillengelenks 1. Bei dieser Ausführungsform umfasst das Brillengelenk 1 keinen Stift 7.

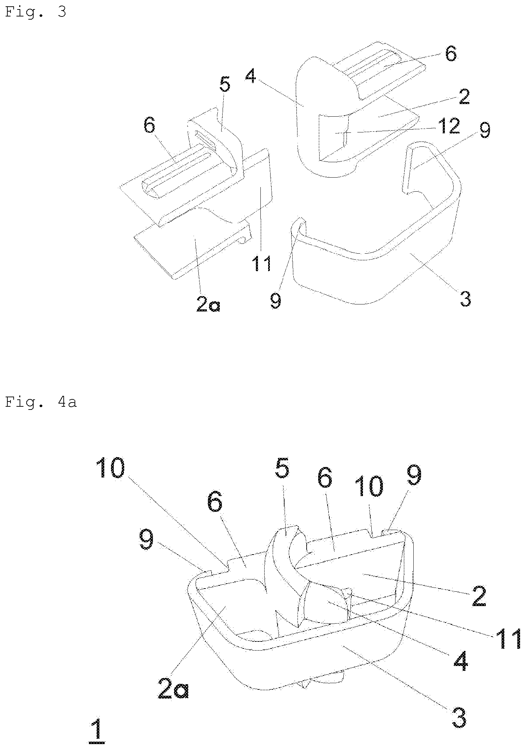

Die Figur 3 zeigt eine Explosionsdarstellung der in den Figuren 2a und 2b gezeigten Ausführungsform des Brillengelenks 1, bestehend aus zwei Gelenkteilen 2 und 2a und einer Verbindungsklammer 3.

Der Steg 11 am Gelenk 1 ist für die korrekte Stellung im aufgeschlagenen Zustand verantwortlich. Er legt sich auf die Auflagefläche 12 und verhindert so ein weiteres Aufschlagen.
Bei größerer Krafteinwirkung kann das Gelenk aber weiter geöffnet werden. Das konvexe Gelenkteil 2a verlässt dann die flächige Auflage im konkaven Gelenkteil 2 und dreht sich etwas weiter, bis die Klammer auf dem Steg 11 aufsetzt. Sie begrenzt dann endgültig ein weiteres Aufschlagen und das Gelenk lässt sich nicht zerstörungsfrei weiter aufschlagen.

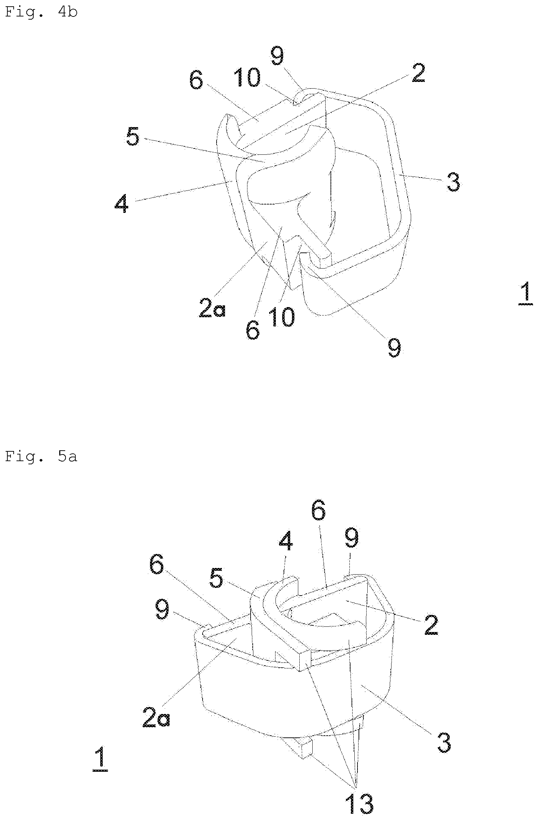

Die Figuren 4a und 4b zeigen eine weitere Ausführungsform des Brillengelenks 1, bei der die Enden 9 der Verbindungsklammer 3 um die Vorrichtung 6 greifen. Die Aussparung 10 ist dabei in Form eines Absatzes ausgebildet, der durch eine Verminderung der Materialstärke in diesem Bereich entsteht.

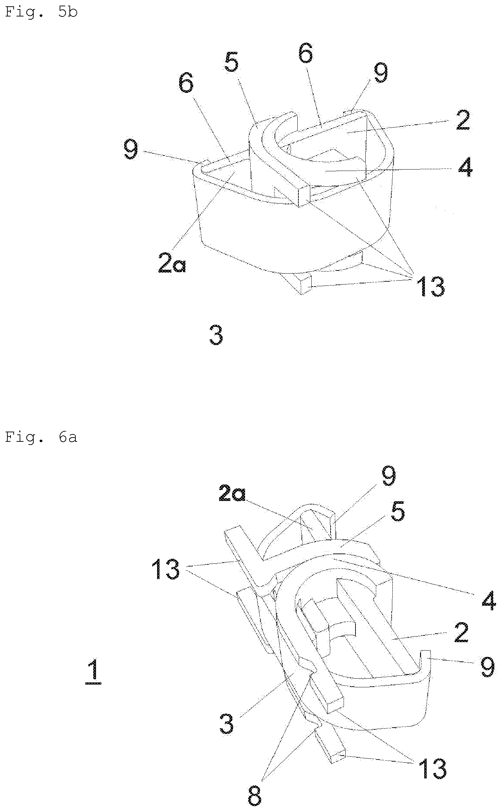

Eine weitere Ausführungsform des Brillengelenks 1 wird in den Figuren 5a und 5b gezeigt. Bei dieser Ausführungsform weisen die kalottenförmige Kappe 5 und die Wölbung 4 Führungsleisten 13 auf, die ein Verrutschen der Verbindungsklammer 3 verhindern. Zudem können die Führungsleisten 13 auch zur Befestigung eines Brillenbügels oder der Brillenfassung dienen.

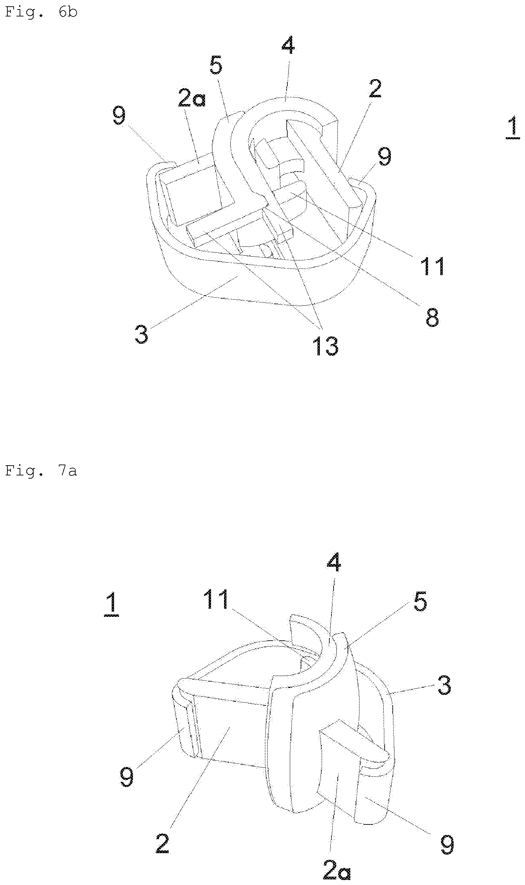

Die Figuren 6a und 6b zeigen eine weitere Ausführungsform des Brillengelenks 1, die im Wesentlichen der in den Figuren 5a und 5b gezeigten Ausführungsform entspricht, abweichend davon jedoch eine etwas andere Ausgestaltung der Führungsleisten 13 aufweist. So besitzen die Führungsleisten 13 einen Anschlag 8, der die Bewegung des Brillengelenks 1 begrenzt.

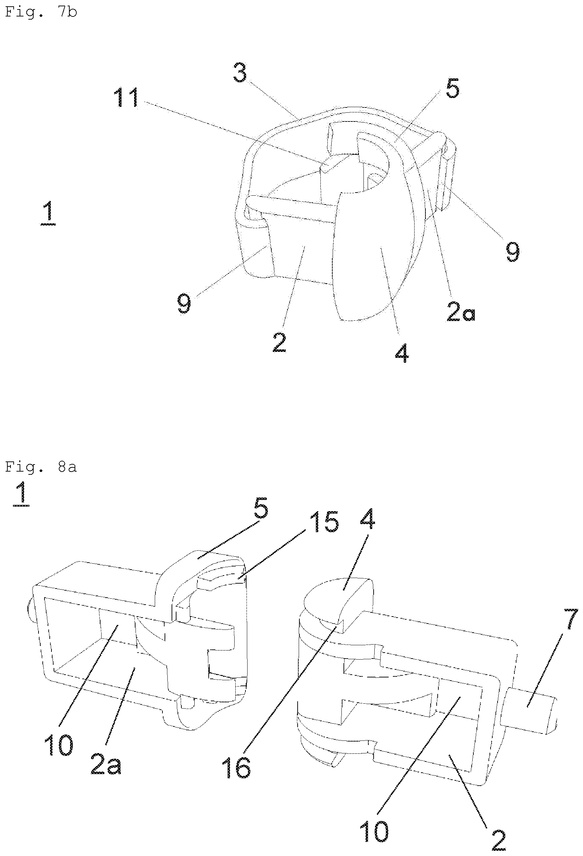

Die in den Figuren 7a und 7b gezeigte Ausführungsform des Brillengelenks 1 unterscheidet sich von der in den Figuren 4a und 4b gezeigten Ausführungsform dadurch, dass die Gelenkteile 2 und 2a an ihren Enden abgeflacht sind. Um diese abgeflachten Enden greifen die Enden 9 der Verbindungsklammer 3.

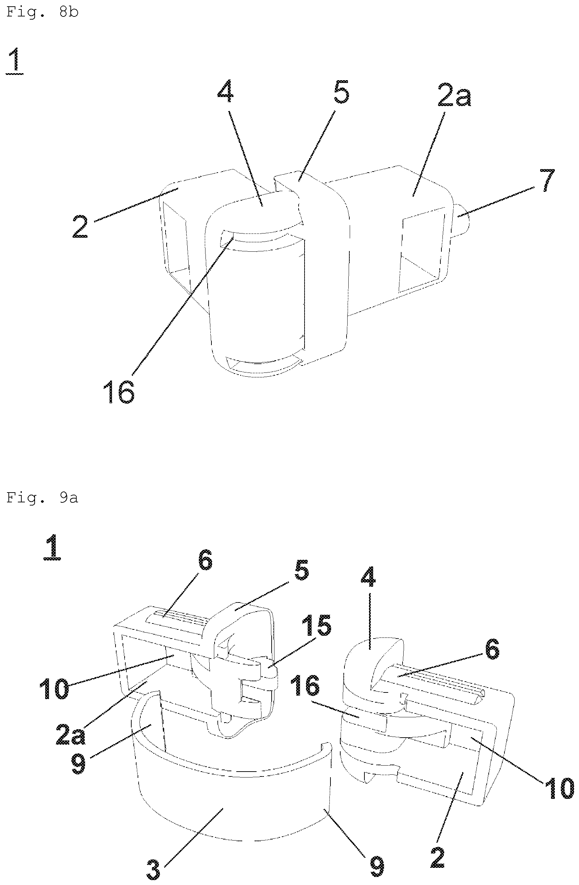

In der in den Figuren 8a und 8b gezeigten Ausführungsform des Brillengelenks weist der Teil 2a des Brillengelenks einen positiv ausgeformten Block 15 auf, der auf der Seite des kalottenförmigen Teils 5 angeordnet ist, welcher zum Gelenkteil 2 weist. Der Gelenkteil 2 weist einen schienenförmigen Bereich 16 auf, welcher so angeordnet und ausgebildet ist, dass er den ausgeformten Block 15 aufnehmen kann. Wobei sich in der in den Figuren 8a und 8b gezeigten Ausführungsform der positiv ausgeformte Block 15 und die Schiene 16 im oberen Bereich der Gelenkteile 2a und 2 befinden.

Auch die in den Figuren 9a und 9b gezeigte Ausführungsform des Brillengelenks 1 weist am Gelenkteil 2a einen positiv ausgeformten Block 15 auf, dem gegenüber an Gelenkteil 2 ein schienenförmiger Bereich 16 ausgebildet ist. Im Unterschied zu dem in den Figuren 8a und 8b gezeigten Ausführungsbeispiel ist der Block 15 annähernd mittig im kalottenförmigen Teil ausgebildet und Schiene 16 ist annähernd mittig im kugelförmigen Teil von Gelenkteil 2a ausgebildet.

Die Figuren 10a, 10b und 10c zeigen eine Ausführungsform des erfindungsgemäßen Brillengelenks, bei welcher dieses zwei Verbindungsklammern 3 umfasst. Jedes der Gelenkteile 2, 2a weist zwei Aussparungen 10 auf, in welche die Verbindungsklammern 3 mit ihren abgebogenen Enden 9 eingreifen. Weiterhin umfasst jedes der Gelenkteile 2, 2a zwei Stifte 7. In der gezeigten Ausführungsform umfasst das Brillengelenk einen Anschlag 8. Die weiteren Merkmale dieser Ausführungsform entsprechen den Merkmalen der in den Figuren 1a bis 1d gezeigten Ausführungsform.

Die in den Figuren 1 bis 10 gezeigten Ausführungsformen des Brillengelenks 1 sind dafür geeignet, in Form einer Einlage (eines Inlays), als Verbindung zwischen Brillenfassung und Brillenbügel eingebaut zu werden.

### Bezugszeichenliste:

- 1: Brillengelenk
- 2, 2a: Gelenkteile
- 3: Verbindungsklammer
- 4: Wölbung
- 5: kalottenförmige Kappe
- 6: Vorrichtung zur Befestigung des Gelenkteils
- 7: Stift
- 8: Anschlag
- 9: abgebogenes Ende der Verbindungsklammer
- 10: Aussparung
- 11: Steg
- 12: Führungskanal
- 13: Führungsleiste
- 14: Profil
- 15: ausgeformter Block
- 16: Schiene

## Patentansprüche

1. Brillengelenk (1) bestehend aus zwei Gelenkteilen (2), (2a) und mindestens einer Verbindungsklammer (3), wobei die mindestens eine Verbindungsklammer (3) ohne Verwendung von Schrauben, Achsstiften oder anderen Befestigungsmitteln die Gelenkteile (2), (2a) gelenkig zusammenhält, **dadurch gekennzeichnet, dass** die Verbindungsklammer (3) ein gebogener, länglicher Materialstreifen ist, dessen Enden (9) zueinander weisend gebogen sind, und eines der Gelenkteile (2) eine Wölbung (4) aufweist und das andere Gelenkteil (2a) eine kalottenförmige Kappe (5) aufweist, wobei die Wölbung (4) des einen Gelenkteils (2) in der kalottenförmigen Kappe (5) des anderen Gelenkteils (2a) angeordnet ist,
und das die Wölbung (4) aufweisende Gelenkteil (2) einen Gelenkkopf bildet, und das die kalottenförmige Kappe (5) aufweisende Gelenkteil (2a) eine Gelenkpfanne bildet.

2. Brillengelenk (1) nach Anspruch 1, **dadurch gekennzeichnet, dass** jedes der Gelenkteile (2), (2a) mindestens eine Aussparung (10) aufweist, in der die Verbindungsklammer (3) fixierbar ist.

3. Brillengelenk (1) nach Anspruch 2, **dadurch gekennzeichnet, dass** die abgebogenen Enden (9) der Verbindungsklammer (3) jeweils in eine der Aussparungen (10) der Gelenkteile (2), (2a) eingreifen.

4. Brillengelenk (1) nach einem der Ansprüche 1 bis 3, **dadurch gekennzeichnet, dass** mindestens eines der beiden Gelenkteile (2), (2a) einen Anschlag (8) aufweist, der den Aufschlagwinkel beim Anwinkeln des Brillengelenks (1) begrenzt.

5. Brillengelenk (1) nach einem der Ansprüche 1 bis 4, **dadurch gekennzeichnet, dass** das Gelenkteil (2a) mindestens eine blockartige Materialerhebung (15) und das Gelenkteil (2) eine Schiene (16) aufweist, die so geformt und dimensioniert ist, dass sie die mindestens eine blockartige Materialerhebung (15) aufnehmen kann.

6. Brillengelenk (1) nach einem der Ansprüche 1 bis 5, **dadurch gekennzeichnet, dass** die Gelenkteile (2), (2a) Vorrichtungen (6) zur Befestigung an einem Brillenbügel oder einer Brillenfassung aufweisen.

7. Brillengelenk (1) nach Anspruch 6, **dadurch gekennzeichnet, dass** die Vorrichtung (6) einen Stift(7), einen Anker oder eine strukturierte Klebefläche aufweist, der beziehungsweise die in einem Brillenbügel oder einer Brillenfassung fixierbar ist.

8. Brillengelenk (1) nach einem der Ansprüche 1 bis 7, **dadurch gekennzeichnet, dass** das eine Ende eines der beiden Gelenkteile (2), (2a) eine Verlängerung in Form eines Brillenbügels aufweist
und/oder das freie Ende des anderen Gelenkteils (2), (2a) eine Verlängerung in Form einer Brillenfassung aufweist.

9. Brillengestell bestehend aus zwei Brillengelenken (1) nach einem der Ansprüche 1 bis 8, zwei Brillenbügeln und einer Brillenfassung, **dadurch gekennzeichnet, dass** die Brillengelenke (1) auf der einen Gelenkseite mit der Brillenfassung verbunden sind und auf der anderen Gelenkseite mit jeweils einem Brillenbügel verbunden sind.

10. Brillengestell umfassend mindestens ein Brillengelenk (1) gemäß den Ansprüchen 1 bis 8.

11. Verwendung eines Brillengelenks (1) gemäß den Ansprüchen 1 bis 8 zur Herstellung eines Brillengestells.

## Claims

1. Eyeglass hinge (1) composed of two hinge parts (2), (2a) and at least one clamp connection (3), wherein the at least one clamp connection (3) holds the hinge parts (2), (2a) together in an articulated manner without the use of screws, axial pins or other fastening means,
**characterized in that** the clamp connection (3) is a bent, elongated strip of material, whose ends (9)are bent pointing towards one another,
and one of the hinge parts (2) has a curvature (4) and the other hinge part (2a) has a dome-shaped cap (5), wherein the curvature (4) of one hinge part (2) is disposed in the dome-shaped cap (5) of the other hinge part (2a), and the hinge part (2) having the curvature (4) forms a hinge head and the hinge part (2a) having the dome-shaped cap (5) form a hinge socket.

2. Eyeglass hinge (1) according to claim 1, **characterized in that** each of the hinge parts (2), (2a) has at least one recess in which the at least one clamp connection (3) can be fixed.

3. Eyeglass hinge (1) according to claim 2, **characterized in that** each of the bent ends (9) of the clamp connection (3) engages in one of the recesses (10) of the hinge parts (2), (2a).

4. Eyeglass hinge (1) according to any of claims 1 to 3, **characterized in that** at least one of the two hinge parts (2), (2a) has a stop piece (8), that limits the opening angle when bending the eyeglass hinge (1).

5. Eyeglass hinge (1) according to any of claims 1 to 4, **characterized in that** the hinge part (2a) has at least one block-like raised material piece (15) and hinge part (2) has a rail (16) that is shaped and dimensioned so that it can receive the at least one block-like raised material piece (15).

6. Eyeglass hinge (1) according to any of claims 1 to 5, **characterized in that** hinge parts (2), (2a) have devices (6) for fastening to an earpiece or to a lens mounting rim.

7. Eyeglass hinge (1) according to claim 6, **characterized in that** device (6) has at least one pin (7), one anchor piece or one textured adhesive surface, which can be fixed in an earpiece or a lens mounting rim.

8. Eyeglass hinge (1) according to any of claims 1 to 7, **characterized in that** one end of one of the two hinge parts (2), 2a has an extension in the shape of an earpiece and/or the free end of the other hinge part (2), (2a) has an extension in the shape of a lens mounting rim.

9. Eyeglass frame composed of two eyeglass hinges (1) according to any of claims 1 to 8, two eyeglass earpieces and one lens mounting rim, **characterized in that** each eyeglass hinge (1) is joined to the lens mounting rim on one side of the hinge and each is joined to an earpiece on the other side of the hinge.

10. Eyeglass frame, comprising at least one eyeglass hinge (1) according to claims 1 to 8.

11. Use of an eyeglass hinge (1) according to claims 1 to 8, for producing an eyeglass frame.

## Revendications

1. Articulation de lunettes (1) constituée de deux parties d'articulation (2), (2a) et d'au moins une agrafe d'assemblage (3), ladite au moins une agrafe d'assemblage (3) maintenant ensemble, de façon articulée, les parties d'articulation (2), (2a) sans utilisation de vis, axes ou autres moyens d'attache, **caractérisée en ce que** l'agrafe d'assemblage (3) est une bande de matière allongée de forme courbe, dont les extrémités (9) sont recourbées de façon à être orientées l'une vers l'autre,
et l'une des parties d'articulation (2) présente un renflement (4) et l'autre partie d'articulation (2a) présente une coiffe en forme de calotte (5), le renflement (4) de l'une des parties d'articulation (2) étant disposé dans la coiffe en forme de calotte (5) de l'autre partie d'articulation (2a),
et la partie d'articulation (2) présentant le renflement (4) forme une tête d'articulation et la partie d'articulation (2a) présentant la coiffe en forme de calotte (5) forme une cavité d'articulation.

2. Articulation de lunettes (1) selon la revendication 1, **caractérisée en ce que** chacune des parties d'articulation (2), (2a) comporte au moins un évidement (10) dans lequel l'agrafe d'assemblage (3) peut se fixer.

3. Articulation de lunettes (1) selon la revendication 2, **caractérisée en ce que** les extrémités recourbées (9) de l'agrafe d'assemblage (3) s'engagent chacune dans l'un des évidements (10) des parties d'articulation (2), (2a).

4. Articulation de lunettes (1) selon l'une des revendications 1 à 3, **caractérisée en ce qu'**au moins l'une des deux parties d'articulations (2), (2a) comprend une butée (8) qui limite l'angle d'impact lors du pliage de l'articulation de lunettes (1).

5. Articulation de lunettes (1) selon l'une des revendications 1 à 4, **caractérisée en ce que** la partie d'articulation (2a) comprend au moins une partie surélevée de matière (15) sous forme de bloc et la partie d'articulation (2) comprend un rail (16) conformé et dimensionné pour recevoir ladite partie surélevée de matière (15) sous forme de bloc.

6. Articulation de lunettes (1) selon l'une des revendications 1 à 5, **caractérisée en ce que** les parties d'articulation (2), (2a) comprennent un moyen (6) pour la fixation sur une branche de lunettes ou un châssis de lunettes.

7. Articulation de lunettes (1) selon la revendication 6, **caractérisée en ce que** le moyen (6) comprend un axe (7) ou un ancrage ou une surface adhésive structurée pouvant respectivement se fixer dans une branche de lunettes ou un châssis de lunettes.

8. Articulation de lunettes (1) selon l'une des revendications 1 à 7, **caractérisée en ce que** l'une des extrémités de l'une des deux parties d'articulation (2), (2a) présente un prolongement sous la forme d'une branche de lunettes et/ou l'extrémité libre de l'autre partie d'articulation (2), (2a) présente un prolongement sous la forme d'un châssis de lunettes.

9. Monture de lunettes constituée de deux articulations de lunettes (1) selon l'une des revendications 1 à 8, de deux branches de lunettes et d'un châssis de lunettes, **caractérisée en ce que** les articulations de lunettes (1) sont reliées sur l'un des côtés de l'articulation au châssis de lunettes et sur l'autre côté de l'articulation à respectivement une branche de lunettes.

10. Monture de lunettes comprenant au moins une articulation de lunettes (1) selon les revendications 1 à 8.

11. Utilisation d'une articulation de lunettes (1) selon les revendications 1 à 8 pour la fabrication d'une monture de lunettes.
